# EUROPÄISCHE PATENTSCHRIFT

(11) **EP 1 106 414 B1**
(45) Veröffentlichungstag und Bekanntmachung des Hinweises auf die Patenterteilung: **11.08.2004**
(21) Anmeldenummer: 00124885.5
(22) Anmeldetag: 15.11.2000
(51) Int. Cl.: B60K 13/04, B60K 15/067

(54) **Vorrichtung zur Befestigung von Anbauteilen an einem Fahrzeug**
Arrangement to mount components to a vehicle
Dispositif de fixation d'organes dans un véhicule

(30) Priorität: 09.12.1999 DE 19959350
(43) Veröffentlichungstag der Anmeldung: 13.06.2001
(73) Patentinhaber: ROTH-TECHNIK AUSTRIA Gesellschaft m.b.H., 3193 St. Aegyd/Neuwalde (AT)
(72) Erfinder: Mai, Hans-Peter, 76456 Kuppenheim/Oberndorf (DE)
(74) Vertreter: Wiedemann, Markus, Dr.

(56) Entgegenhaltungen:
- EP-A- 0 719 914
- DE-A- 19 605 702
- DE-A- 19 605 703
- DE-A- 19 902 915
- DE-U- 9 014 978
- US-A- 4 854 417

## Beschreibung

### Stand der Technik

Die Erfindung geht aus von einem Abgasschalldämpfer beinhaltend eine Befestigungsvorrichtung, über welche er an einem Rahmen eines Nutzfahrzeugs befestigt ist, gemäß dem Oberbegriff von Anspruch 1.

Einen solchen Abgasschalldämpfer beschreibt die EP 0 719 914 A1. Die Befestigungsvorrichtung besteht aus zwei getrennt voneinander am Rahmen gehaltenen, den Abgasschalldämpferkörper von außen umfassenden Trägern.

Das Gebiet der Erfindung betrifft Abgasschalldämpfer von Nutzfahrzeugen und folglich Fahrzeuge einer höheren Gewichtsklasse, welche über einen eigenen Rahmen verfügen. Solche Fahrzeuge haben in der Regel großvolumige Motoren mit entsprechend groß und schwer bauenden Abgasschalldämpfern, was entsprechende Festigkeits- und Schwingungsprobleme mit sich bringt.

Demgegenüber ist der Abgasschalldämpfer gemäß der DE 199 02 915 A direkt am Zylinderkopf der Brennkraftmaschine gehalten, wie dies bei Zweitakt-Benzinmotoren für kleine, tragbare Arbeitsmaschinen, wie etwa Heckenscheren oder Kettensägen der Fall ist. Auch der in der US-A-4 854 417 offenbarte Abgasschalldämpfer ist durch eine Montageplatte und von dieser weg ragende Stützrohre, die an einer Innenwand gehalten sind, direkt am Zylinderkopf der Brennkraftmaschine befestigt und folglich einer kleinen Arbeitsmaschine zugeordnet. Das Problem, einen großen Abgasschalldämpfer möglichst steif und schwingungsarm an einem Fahrzeugrahmen zu befestigen, stellt sich hier folglich nicht.

Der vorliegenden Erfindung liegt demgegenüber die Aufgabe zugrunde, einen Abgasschalldämpfer der eingangs erwähnten Art derart weiterzubilden, dass er bei möglichst kompakter Bauweise steif und schwingungsarm am Rahmen eines Kraftfahrzeugs zu befestigen ist.

Erfindungsgemäß wird diese Aufgabe dadurch gelöst, dass die Befestigungsvorrichtung eine am Rahmen lösbar befestigte Montageplatte und mindestens ein von dieser weg ragendes, an wenigstens einer Innenwand im Innenraum des Abgasschalldämpfers gehaltenes, kein Abgas führendes Stützelement umfasst.

### Vorteile der Erfindung

Die erfindungsgemäße Vorrichtung gemäß Patentanspruch 1 hat den Vorteil, dass wegen ihrer Integration in den Abgasschalldämpfer und wegen dem hierdurch möglichen Verzicht auf äußere Halteelemente der Abgasschalldämpfer größer dimensioniert werden kann. Darüber hinaus erhält man eine äußerst platzsparende und kompakte Bauweise. Weiterhin kann auf eine separate Befestigungsvorrichtung für ein Wärmeschutzblech verzichtet werden, denn wegen Fehlens von äußeren Halteelementen kann z.B. eine Isoliermatte direkt auf die Mantelfläche des Abgas-Schalldämpfers aufgebracht werden, um die Wärmeabgabe nach außen hin zu beschränken. Weil die Befestigungsvorrichtung mit dem Abgasschalldämpfer eine integrale Einheit bildet und diese lediglich durch beispielsweise Festschrauben der Montageplatte am Kraftfahrzeug befestigt wird, ist die Montage äußerst einfach und kostengünstig.

Dass das wenigstens eine Stützelement an wenigstens einer Innenwand im Innenraum des Abgasschalldämpfers gehalten ist, erhöht die Gestaltsteifigkeit des Abgasschalldämpfers merklich, darüber hinaus wird über die Innenwand eine gleichmäßige Kraftübertragung vom Stützelement auf die Mantelwand des Abgasschalldämpfers gewährleistet.

Da das Stützelement insbesondere nicht abgasführend ist, kann es, da keiner weiteren Funktion verpflichtet, durch geeignete Wahl der Geometrie bzw. des Materials in einem weiten Bereich abhängig von den jeweiligen Anforderungen angepasst werden. Wenn beispielsweise der Abgasschalldämpfer ein hohes Gewicht aufweist bzw. großen Vibrationen ausgesetzt ist, muss das Stützelement entsprechend dimensioniert sein. Das Stützelement kann folglich die jeweiligen Festigkeits- und Steifigkeitsanforderungen erfüllen, ohne Rücksicht auf weitere Funktionen nehmen zu müssen.

Durch die in den Unteransprüchen aufgeführten Maßnahmen sind vorteilhafte Weiterbildungen und Verbesserungen der im Patentanspruch 1 angegebenen Erfindung möglich.

Besonders bevorzugt ist als Stützelement wenigstens ein in einer horizontalen Ebene angeordnetes Stützrohr vorgesehen, das den Innenraum des Abgasschalldämpfers wenigstens teilweise durchragend sich mindestens von einer halterseitigen Seitenwand bis zur Innenwand erstreckt.

Eine besonders zu bevorzugende Weiterbildung der Erfindung sieht vor, daß die Stützrohre in Durchgangsbohrungen von auf den Querschnitt des Innenraums zugeschnittenen, sich quer zu den Stützrohren erstreckenden, entlang der Längserstreckung der Stützrohre mit Parallelabstand zueinander angeordneten Innenwänden gehalten sind, die mit einer Wandung des Abgasschalldämpfers vorzugsweise durch Schweißung oder Preßsitz umlaufend verbunden sind. Durch die in Längsrichtung der Stützrohre verteilten Innenwände steigt zum einen die Gestaltfestigkeit das Abgasschalldämpfers, zum andern wird eine gleichmäßige Kraftübertragung auf die Stützrohre gewährleistet.

### Zeichnungen

Ein Ausführungsbeispiel der Erfindung ist in den Zeichnungen dargestellt und in der nachfolgenden Beschreibung näher erläutert. In den Zeichnungen zeigen
- Fig. 1: eine seitliche Querschnittsdarstellung durch einen AbgasSchalldämpfer, welcher mittels einer erfindungsgemäßen Vorrichtung an einem Längsträger eines Nutzfahrzeugs befestigt ist,
- Fig.2: einen Ausschnitt aus Fig.1,
- Fig.3: eine Vorderansicht des Schalldämpfers von Fig.1.

### Beschreibung des Ausführungsbeispiels

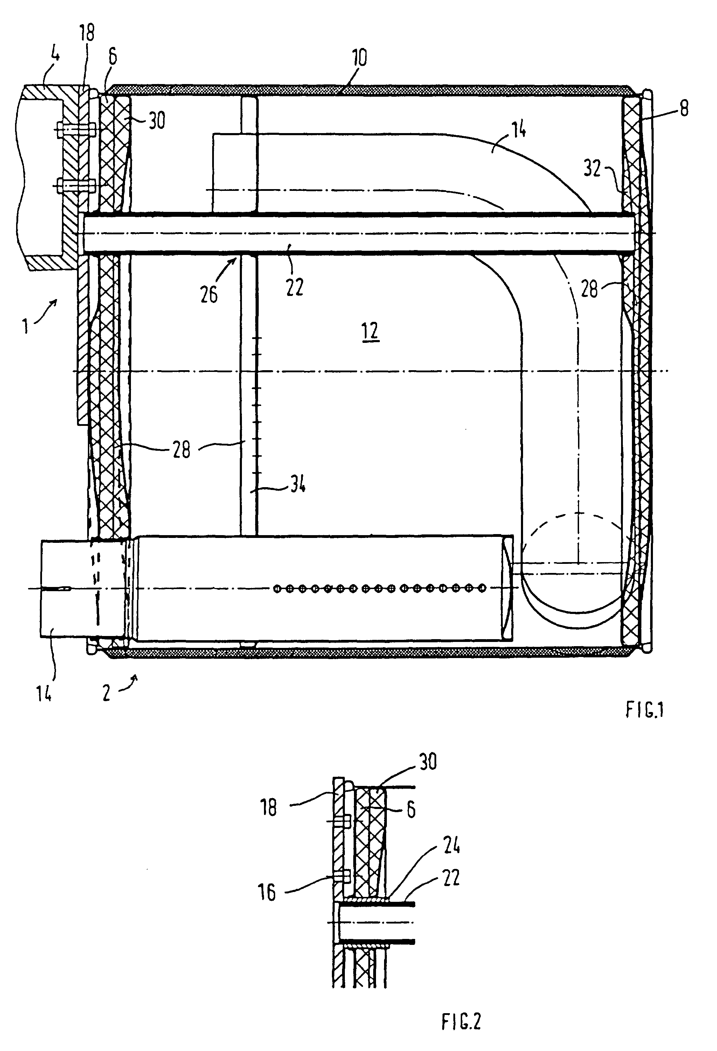

Im Ausführungsbeispiel nach Fig.1 dient die erfindungsgemäße Vorrichtung 1 in bevorzugter Ausführungsform zur Befestigung eines hohlen Anbauteils in Form eines Abgas-Schalldämpfers 2 an einem Längsträger 4 oder Längsträgerhalter eines Nutzfahrzeugs. Eine äußere Hülle des Abgas-Schalldämpfers 2 besteht im wesentlichen aus zwei zueinander parallelen Seitenwänden 6, 8, welche durch eine umlaufende Mantelwand 10 miteinander verbunden sind. In einem durch die Seitenwände 6, 8 und die Mantelwand 10 umschlossenen Innenraum 12 des Abgas-Schalldämpfers 2 sind hier nicht weiter interessierende Abgasrohre 14 gehalten.

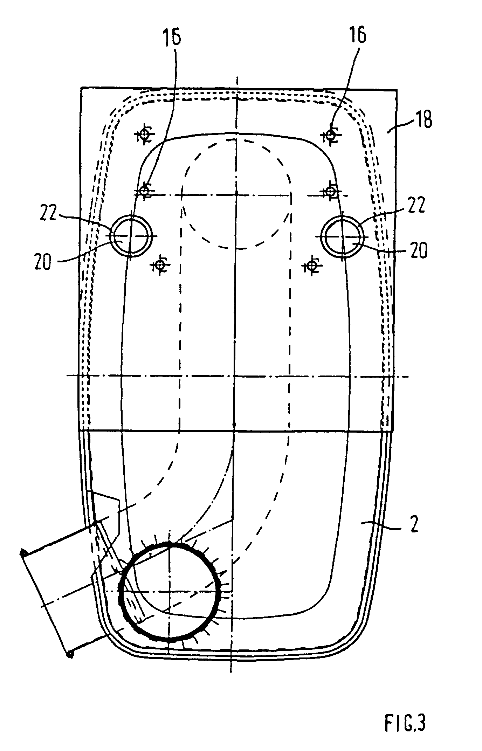

Die Vorrichtung 1 umfaßt eine an den Längsträger 4 oder Längsträgerhalter beispielsweise angeschraubte, hierzu mit Gewindebohrungen 16 oder Schweißmuttern versehene, vorzugsweise äußere Montageplatte 18, welche am besten anhand der Vorderansicht gemäß Fig.3 zu sehen ist. Die Montageplatte 18 hat zusätzlich zwei größere Durchgangsbohrungen 20, in welche je ein Stützrohr 22 eingesteckt und vorzugsweise durch eine endseitig aufgeschobene Muffe 24 an die Montageplatte 18 angeschweißt ist (Fig.2).

Die Stützrohre 22 sind in einer horizontalen Ebene mit Parallelabstand zueinander angeordnet und in den Abgas-Schalldämpfer 2 integriert, indem sie vorzugsweise rechtwinklig von der Montageplatte 18 weg, in den geschlossenen Innenraum 12 des Abgas-Schalldämpfers 2 hinein ragen. Die Stützrohre 22 erstrecken sich beispielsweise von der einer Seitenwand 6 des Abgasschalldämpfers 2 bis zu dessen gegenüberliegender Seitenwand 8, mit welchen sie z.B. durch Verschweißen verbunden sein können. Die Montageplatte 18 ist von außen auf die eine Seitenwand 6 des Abgas-Schalldämpfers 2 aufgesetzt und mit dieser beispielsweise verschweißt. Alternativ könnte die Montageplatte die Seitenwand 6 auch von innen her kontaktieren und wie die Stützrohre in den Innenraum 12 des Abgas-Schalldämpfers integriert sein. Dann sind lediglich Durchgangsbohrungen in der einen Seitenwand 6 vorzusehen, welche sich mit den Gewindebohrungen 16 der Montageplatte 18 decken.

Die Stützrohre 22 sind in Durchgangsbohrungen 26 von auf den Querschnitt des Innenraums 12 des Abgas-Schalldämpfers 2 zugeschnittenen, sich quer zu den Stützrohren 22 erstreckenden, entlang der Längserstreckung der Stützrohre 22 mit Parallelabstand zueinander angeordneten Innenwänden 28 vorzugsweise durch Verschweißung gehalten. Hierbei steht eine erste Innenwand 30 mit der einen Seitenwand 6 von innen her in Kontakt, eine zweite Innenwand 32 liegt im Bereich der anderen Seitenwand 8 und eine dritte Innenwand 34 ist im Bereich zwischen der ersten und der zweiten Innenwand 30, 32 angeordnet. Die Innenwände 28 stehen in vorzugsweise kraft- bzw. stoffschlüssiger Verbindung mit der Mantelwand 10, indem die erste und die dritte Innenwand 30, 34 mit der Mantelwand 10 verschweißt und die zweite Innenwand 32 in die von der Mantelwand 10 umschlossene Öffnung eingepreßt ist. Je nach Art des Anbauteils und Erfordernis können die Innenwände 28 durchgehend flächig ausgebildet, mit Durchbrüchen versehen oder auch in Form von Quer- und/oder Längsrippen ausgebildet sein, die nicht den gesamten Querschnitt des Anbauteils einnehmen.

Die Innenwände 28 leiten die vom Gewicht des Abgas-Schalldämpfers 2 her rührenden Kräfte und die auf diesen aufgrund der Abgasschwingungen wirkenden dynamischen Kräfte über die Stützrohre 22 in die Montageplatte 18 ein, von wo aus sie auf den Längsträger 4 des Nutzfahrzeugs übertragen werden können. Die von der Montageplatte 18 auskragenden Stützrohre 22 sind durch die Gewichtskräfte hauptsächlich auf Biegung beansprucht und daher entsprechend zu dimensionieren. Wegen der hohen dynamischen Wechselbelastungen, denen der Abgas-Schalldämpfer 2 aufgrund der Abgasschwingungen ausgesetzt ist, ist zusätzlich eine ausreichende Dauerfestigkeit der Einzelkomponenten und deren Verbindungen untereinander zu berücksichtigen.

## Patentansprüche

1. Abgasschalldämpfer beinhaltend eine Befestigungsvorrichtung (1), über welche er an einem Rahmen (4) eines Nutzfahrzeugs befestigt ist, **dadurch gekennzeichnet, dass** die Befestigungsvorrichtung (1) eine am Rahmen (4) lösbar befestigte Montageplatte (18) und mindestens ein von dieser weg ragendes, an einer Innenwand (28) im Innenraum (12) des Abgasschalldämpfers (2) gehaltenes, kein Abgas führendes Stützelement (22) umfasst.

2. Abgasschalldämpfer nach Anspruch 1, **dadurch gekennzeichnet, dass** als Stützelement wenigstens ein in einer horizontalen Ebene angeordnetes Stützrohr (22) vorgesehen ist, das den Innenraum (12) des Abgasschalldämpfers (2) wenigstens teilweise durchragend sich mindestens von einer halterseitigen Seitenwand (6) bis zur Innenwand (28) erstreckt.

3. Abgasschalldämpfer nach Anspruch 2, **dadurch gekennzeichnet, dass** die Montageplatte (18) von außen oder von innen an der halterseitigen Seitenwand (6) vorzugsweise durch Schweißung befestigt ist.

4. Abgasschalldämpfer nach Anspruch 3, **dadurch gekennzeichnet, dass** die Montageplatte (18) mit Gewindebohrungen (16) oder Schweißmuttern versehen ist, um sie mittels Schrauben am Rahmen (4) des Nutzfahrzeugs lösbar zu befestigen.

5. Abgasschalldämpfer nach Anspruch 4, **dadurch gekennzeichnet, dass** die Stützrohre (22) endseitig durch Muffen (24) an die Montageplatte (18) angeschweißt sind.

6. Abgasschalldämpfer nach Anspruch 5, **dadurch gekennzeichnet, daß** die Stützrohre (22) in kraftübertragender Verbindung mit mehreren Innenwänden (28) stehen.

7. Abgasschalldämpfer nach Anspruch 6, **dadurch gekennzeichnet, dass** die Stützrohre (22) in Durchgangsbohrungen (26) von auf den Querschnitt des Innenraums (12) zugeschnittenen, sich quer zu den Stützrohren (22) erstreckenden, entlang der Längserstreckung der Stützrohre (22) mit Parallelabstand zueinander angeordneten Innenwänden (28) gehalten sind, die mit einer Wandung (10) des Abgasschalldämpfers (2) vorzugsweise durch Schweißung oder Preßsitz umlaufend verbunden sind.

## Claims

1. An exhaust silencer, including an attachment apparatus (1), with which it is attached to a chassis frame (4) of a commercial vehicle, **characterized in that** said attachment apparatus (1) comprises a mounting plate (18) detachably mounted on said chassis frame (4) and at least one support element (22) extending away from said mounting plate (18) and held at an interior wall (28) in the interior (12) of said exhaust silencer (2) and not flown through by an exhaust gas.

2. The exhaust silencer according to claim 1, **characterized in that** at least one support tube (22) is provided as said support element, arranged in a horizontal plane, extending at least partially through said interior (12) of said exhaust silencer (2) and extending at least from a side wall (6), on the mounting side, to said interior wall (28).

3. The exhaust silencer according to claim 2, **characterized in that** said mounting plate (18) is attached at said side wall (6), on the mounting side, preferably by welding from the outside or from the inside.

4. The exhaust silencer according to claim 3, **characterized in that** said mounting pate (18) is provided with threaded bores (16) or welded nuts in order to enable detachable mounting on said chassis frame of said commercial vehicle by means of bolts.

5. The exhaust silencer according to claim 4, **characterized in that** said support tubes (22) are welded to said mounting plate (18) at their ends via sleeves (24).

6. The exhaust silencer according to claim 5, **characterized in that** said support tubes (22) are in force-transmitting engagement with a plurality of interior walls (28).

7. The exhaust silencer according to claim 6, **characterized in that** said support tubes (22) are held in through holes (26) of said interior walls (28) adapted to the cross-sectional area of said interior (12) and extending in a transverse direction to said support tubes (22) along the longitudinal extension of said support tubes (22) and positioned in a parallel configuration at a distance from each other, said interior walls (28) being connected with a wall (10) of said exhaust silencer (2) preferably by a circumferential weld or press fit.

## Revendications

1. Silencieux contenant un dispositif de fixation (1) par lequel il est fixé à un châssis (4) d'un véhicule utilitaire, **caractérisé en ce que** le dispositif de fixation (1) comprend une plaque de montage (18) fixée de manière amovible au châssis (4) et au moins un élément d'appui (22) qui ne conduit pas de gaz d'échappement, qui fait saillie à partir de celle-ci et qui est maintenu sur une paroi intérieure (28) dans l'espace intérieur (12) du silencieux (2).

2. Silencieux selon la revendication 1, **caractérisé en ce qu'**il est prévu comme élément d'appui au moins un tube de support (22) placé dans un plan horizontal qui, en traversant au moins partiellement l'espace intérieur (12) du silencieux (2), s'étend au moins à partir d'une paroi latérale côté support (6) jusqu'à la paroi intérieure (28).

3. Silencieux selon la revendication 2, **caractérisé en ce que** la plaque de montage (18) est fixée de l'extérieur ou de l'intérieur à la paroi latérale côté support (6) de préférence par soudure.

4. Silencieux selon la revendication 3, **caractérisé en ce que** la plaque de montage (18) est pourvue de forures filetées (16) ou d'écrous à souder pour la fixer de manière amovible au châssis (4) du véhicule utilitiare au moyen de vis.

5. Silencieux selon la revendication 4, **caractérisé en ce que** les tubes de support (22) sont soudés du côté de l'extrémité par des manchons (24) à la plaque de montage (18).

6. Silencieux selon la revendication 5, **caractérisé en ce que** les tubes de support (22) sont en relation de transmission de force avec plusieurs parois intérieures (28).

7. Silencieux selon la revendication 6, **caractérisé en ce que** les tubes de support (22) sont maintenus dans des forures filetées (26) par des parois intérieures (28) coupées à la section de l'espace intérieur (12), qui s'étendent transversalement par rapport aux tubes de support (22), placées à un écart parallèle l'une de l'autre le long de l'extension longitudinale des tubes de support (22), parois intérieures qui sont reliées à une paroi (10) du silencieux (2), de préférence tout autour par soudure ou par ajustage serré.
